# EUROPEAN PATENT APPLICATION

(11) **EP 4 378 875 A1**
(43) Date of publication of application: **05.06.2024**
(21) Application number: 22383178.5
(22) Date of filing: 02.12.2022
(51) Int. Cl.: B66B 5/18

(54) **FRICTIONLESS SAFETY BRAKE ACTUATOR**

(71) Applicant: Otis Elevator Company, Farmington, Connecticut 06032 (US)
(72) Inventor: Ruben Marante Chasco, Leganés, Madrid 28919 (ES)
(74) Representative: Dehns

(57) **Abstract**

A frictionless safety brake actuator (100') comprises:
a fixed component (110);
a movable component (120);
wherein one of the fixed component (110) or the movable component (120) comprises a magnetic portion (122a) and the other of the fixed component (110) or the movable component (120) comprises a controllable electromagnet (114);
a connection arrangement (140) configured to connect a linkage to the movable component (120), wherein the linkage is actuatable so as to move a safety brake into frictional engagement with an elevator guide rail; and
at least one biasing member (130) arranged to apply a biasing force (F_{B}) to the movable component (120) to bias the movable component (120) towards a first position in which the linkage is actuated;
wherein the movable component (120) is moveable against the biasing force (F_{B}) to move between the first position and a second position in which the linkage is not actuated;
wherein the fixed component (110) and the movable component (120) together confine a magnetic field between the controllable electromagnet (114) and the magnetic portion (122a) in a magnetic circuit (150);
wherein, dependent upon control of the electromagnet (114), the magnetic circuit (150) selectively produces an attractive magnetic force (F_{A}), larger than the biasing force (F_{B}), which acts upon the magnetic portion (122a) against the biasing force (F_{B}) of the at least one biasing member (130) to move the movable component (120) from the first position to the second position.

## Description

### Technical field

This disclosure relates to frictionless safety brake actuators and braking systems for use in an elevator system.

### Background

It is known in the art to mount safety brakes onto elevator components moving along guide rails, to bring the elevator component quickly and safely to a stop, especially in an emergency. In many elevator systems the elevator car is hoisted by a tension member with its movement being guided by a pair of guide rails. Typically, a governor is used to monitor the speed of the elevator car. According to standard safety regulations, such elevator systems must include an emergency braking device (known as a safety brake, "safety gear" or "safety") which is capable of stopping the elevator car from moving downwards, even if the tension member breaks, by gripping a guide rail. Safety brakes may also be installed on the counterweight or other components moving along guide rails.

Electronic Safety Actuators (ESA's) are now commonly used instead of using mechanical governors to trigger a safety brake, e.g. using electronic or electrical control. ESA's typically activate a safety brake by controlled release of a magnet (either a permanent magnet or an electromagnet) to drag against the guide rail, and using the friction resultant therefrom to pull up on a linkage attached to the safety brake. The reliance on the friction interaction between a magnet and the guide rail has a number of potential complexities, especially in high-rise elevator systems, as the interaction between the magnet and the guide rail causes wear on the guide rail, and can induce chipping, as well as debris accumulation.

There is therefore a need to improve safety actuation of the safety brakes.

### Summary

According to a first aspect of this disclosure there is provided a frictionless safety brake actuator for use in an elevator system. The frictionless safety brake actuator comprising:
a fixed component;
a movable component;
wherein one of the fixed component or the movable component comprises a magnetic portion and the other of the fixed component or the movable component comprises a controllable electromagnet;
a connection arrangement configured to connect a linkage to the movable component, wherein the linkage is actuatable so as to move a safety brake into frictional engagement with an elevator guide rail; and
at least one biasing member arranged to apply a biasing force to the movable component to bias the movable component towards a first position in which the linkage is actuated;
wherein the movable component is moveable against the biasing force to move between the first position and a second position in which the linkage is not actuated;
wherein the fixed component and the movable component together confine a magnetic field between the controllable electromagnet and the magnetic portion in a magnetic circuit;
wherein, dependent upon control of the electromagnet, the magnetic circuit selectively produces an attractive magnetic force, larger than the biasing force, which acts upon the magnetic portion against the biasing force of the at least one biasing member to move the movable component from the first position to the second position.

Activation of the frictionless safety brake actuator will release the movable component to move to the first position, actuating the linkage to bring the safety brake into frictional engagement with an elevator guide rail. The action of returning the movable component from the first position to the second position can be referred to as the reset procedure, where the frictionless safety brake actuator is returned to a state for normal elevator system operation, to allow for activation of the frictionless safety brake actuator to trigger braking on the guide rail.

It will be appreciated that the attractive magnetic force can be used to hold the movable component in the second position (i.e. during normal elevator system operation) and to reset the frictionless safety brake actuator by returning the movable component to the second position.

It will be appreciated that the use of a confined magnetic field in a magnetic circuit, increases the efficiency of the magnetic forces in the system by efficiently channelling the magnetic fields. In this way, less current is needed through the electromagnet to produce the same force, reducing the power demand for the actuation of the safety brake.

The magnetic portion can be made from any material that has physical attributes that are mediated by a magnetic field created by the electromagnet, to cause the interactions and movements as outlined. In some examples the magnetic portion comprises a ferromagnetic material. In some examples the magnetic portion comprises a ferrimagnetic material. In some examples the magnetic portion is a permanent magnet (i.e. a hard magnetic material), that has an associated magnetic field which produces an attractive magnetic force between the magnetic material and the electromagnet, even when the electromagnet is deactivated. In the examples where the magnetic portion is a permanent magnet the magnetic forces can be contributed to by both the electromagnet and the permanent magnet, depending on the operation of the electromagnet. In some examples the magnetic portion is not a permanent magnet (i.e. a soft magnetic material), so the only magnetic forces in the frictionless safety brake actuator are produced by the activated electromagnet.

In some examples, one of the fixed component or the movable component comprises two protrusions configured to co-operate with the other of the fixed component or the movable component. In some examples, the two protrusions comprise a magnetically permeable material configured to confine the magnetic field in the magnetic circuit.

In some examples, the fixed component comprises a magnetically permeable zone configured to confine a magnetic field in the magnetic circuit. In some examples, the movable component comprises a magnetically permeable zone configured to confine a magnetic field in the magnetic circuit.

A magnetically permeable zone is a zone within a specific component (i.e. the fixed component, the movable component or the protrusions) which comprises a material with a high magnetic permeability (e.g. a soft magnetic material), where permeability is the measure of magnetization that a material obtains in response to an applied magnetic field. It will be appreciated that by increasing the proportion of magnetically permeable material in the magnetic circuit, the magnetic field will be more effectively confined in the magnetic circuit. The more effectively the magnetic circuit can confine the magnetic field, the more efficient the frictionless safety brake actuator. By configuring the protrusions to be of a magnetically permeable material the applied magnetic field will additionally magnetize the protrusions, increasing the magnetic flux in the magnetic circuit, and any magnetic forces. The same effect is created by the addition of magnetically permeable material in the fixed component and/or the movable component. The magnetically permeable material may be part of the electromagnet (e.g. the magnetically permeable zone may be the core of the electromagnet).

In some examples, when the movable component is in the first position and when the movable component is in the second position, there is no airgap in the magnetic circuit created by the electromagnet and the magnetic portion. It will be appreciated that when the movable component is in the first position, the magnetic circuit is larger than when the movable component is in the second position. By creating a complete magnetic circuit even when the movable component is in the first position, the reset action of returning the movable component to the second position requires less power than with a magnetic field which is not fully confined due to the existence of an airgap.

In some examples, the two protrusions are telescopic arms. Telescopic arms allow for the movement of the movable component to be fully guided and suitably restricted, without the need for additional components to guide the movement of the movable component, or provide a maximum actuation distance for the movable component. The difference in length between the telescopic arms when retracted and extended can be the maximum stroke length required to fully actuate the safety brake. The telescopic arms may be adjustable so the frictionless safety brake actuator is able to be installed in a variety of different elevator systems where the stroke length of actuation of the safety brake may vary between systems and components needing braking. Additionally, when the telescopic arms comprise a magnetically permeable material, the arms provide a simple way in which there is a continuous magnetically permeable path for the magnetic circuit, with no air gap, as discussed above.

In some examples, the at least one biasing member comprises at least one compression spring. In some examples, the compression spring is a mechanical coil. In some examples the at least one compression spring is arranged between the fixed component and the movable component. In some examples, the at least one biasing member comprises at least one tension spring. In some examples, the at least one tension spring is arranged above the movable component. In other examples, the at least one biasing member can be a pneumatic spring. In some examples, the at least one biasing element can be a hydraulic spring. In some examples, the at least one biasing element can be an elastomer spring. It will be appreciated that the at least one biasing element is required to have a repeatable, and predictable biasing force which can move the movable component. For example, a compression spring, with a defined spring constant, may be suitable for providing the required biasing force.

In some examples, the at least one compression spring comprises a pair of compression springs formed around the two protrusions. By arranging the compression springs around the two protrusions, the frictionless safety actuator is able to be designed in a compact manner. Additionally, by forming the compression springs around the protrusions, it ensures that the biasing force is all directed in a direction which pushes the movable component away from fixed component i.e. and upwards direction.

In some examples, the frictionless safety brake actuator is designed as a failsafe system. In the failsafe examples, the magnetic portion comprises magnetic material, and wherein the electromagnet is operable to create the magnetic circuit which produces the attractive magnetic force between the magnetic material and the electromagnet to keep the movable component in the second position; and
wherein, when the electromagnet is deactivated, the biasing force of the at least one biasing member moves the movable component to the first position.

In some failsafe examples, the electromagnet is operable to produce the attractive magnetic force which acts upon the magnetic material to move the movable component from the first position to the second position i.e. during a reset procedure.

In some failsafe examples, the magnetic material is a permanent magnet, with intrinsic magnetic field which creates an attractive magnetic force less than the biasing force of the at least one biasing member. In these examples, the electromagnet is controlled to contribute to the magnetic field, to create an overall attractive magnetic force larger than the biasing force of the at least one biasing member. It will be appreciated that by introducing a permanent magnet with a smaller magnetic field, the frictionless safety brake actuator can be more energy efficient, whilst remaining a failsafe system. In some examples the magnetic material is not a permanent magnet i.e. the only magnetic field in the frictionless safety brake actuator is created by the electromagnet.

As the failsafe examples only require electricity to keep the movable plate in the second position i.e. the normal operation position, it will be appreciated that in a failsafe system, any interruption of power to the frictionless safety brake actuator, will result in the actuation of the safety brake. The failsafe system therefore increases the safety of the elevator system, by for example, stopping an elevator car safety in the hoistway in the event of a power outage.

In some other examples the frictionless safety brake actuator is designed as a non-failsafe system. In such examples, the magnetic portion is a permanent magnet, and wherein the permanent magnet has an intrinsic magnetic field which is confined by the magnetic circuit to produce the attractive magnetic force between the deactivated electromagnet and the permanent magnet, to keep the movable component in the second position;
wherein the electromagnet is operable to produce an opposing magnetic field which produces a repulsive magnetic force, which in combination with the biasing force of the at least one biasing member, is larger than the attractive magnetic force produced by the intrinsic magnetic field of the permanent magnet; and
wherein, when the electromagnet is operated to produce the opposing magnetic field, the combination of the biasing force and the repulsive magnetic force move the movable component to the first position.

It will be appreciated that, in the non-failsafe examples, no power is required during the normal operation of the elevator system. Instead power is only required for the activation of the frictionless safety brake actuator. This has the advantage of reducing the power consumption of the elevator system.

In some examples, the intrinsic magnetic field of the permanent magnet does not produce an attractive magnetic force between the movable component and the fixed component strong enough to move the movable component against the biasing force of the at least one biasing member when in the movable component is in the first position. The electromagnet can therefore be operated to contribute to the magnetic field of the permanent magnet to produce a combined attractive magnetic force which can move the movable component from the first position to the second position against the biasing force of the at least one biasing member i.e. during a reset procedure. This has the advantage or preventing the safety brake from disengaging from the guide rail unless the frictionless safety brake actuator is reset.

In some non-failsafe examples, the electromagnet is deactivated, so the attractive magnetic force can act upon the magnetic portion against the biasing force of the at least one biasing member to move the movable component from the first position to the second position i.e. the intrinsic magnetic field of the permanent magnet is sufficient to produce the attractive magnetic force, even when the movable component is in the first position.

In some examples, the fixed component comprises the magnetic portion and the movable component comprises the electromagnet. In some examples, the fixed component comprises the electromagnet and the movable component comprises the magnetic portion. The electromagnet being in the fixed component removes the need for any movable electrical components, which might disconnect with regular movement, hence increasing the reliability and operational life span of the frictionless safety brake actuator.

In some examples, the electromagnet is controllable between an activated state and a deactivate state. An activated electromagnet has a non-zero current running through it, which therefore produces a magnetic field. A deactivated electromagnet produces no magnetic field. It will be appreciated that in a failsafe system, there may be no requirement for a variable electromagnet. Such an electromagnet can be electrically controlled by a simple switch, without the requirement for an electronic controller. This has the advantage of simplifying the activation of the frictionless safety brake actuator.

In another set of examples, the electromagnet is controllable between a positive activated state, a negative activated state, and a deactivated state. A positive activated state can have a current running in a first direction, producing an attractive magnetic force, and a negative activated state can have a current running in an opposite direction to the first direction, producing a repulsive magnetic force. In some examples the electromagnet can produce a variable magnetic field i.e. the electromagnet may be controllable by varying a current through the electromagnet to vary the flow of magnetic flux through the magnetic circuit. The varying current may be a non-zero current. In some examples, the current is variable within a range that includes a zero current. The electromagnet can be controlled by an electronic controller. The controller may be part of the frictionless safety brake actuator. The controller may be external to the frictionless safety brake actuator e.g. the controller may be a controller for a braking system or the controller may be a controller for an elevator system.

According to another aspect of the present disclosure there is provided a braking system for an elevator component movable along a guide rail, the braking system comprising:
a safety brake;
a linkage configured to actuate the safety brake;
and the frictionless safety brake actuator as described above, wherein the connection arrangement connects the frictionless safety brake actuator to the linkage, and wherein when the frictionless safety brake actuator is activated, the movable component is moved to the first position in which the linkage is actuated, so as to move the safety brake into frictional engagement with an elevator guide rail.

In some examples, the elevator component movable along a guide rail is an elevator car. In some examples the elevator component movable along a guide rail is a counterweight.

In some examples, the braking system comprises a controller.

In some examples, the reset of the frictionless safety brake actuator also resets the safety brake. In some examples the safety brake requires resetting separately to the frictionless safety brake actuator.

According to another aspect of the present disclosure there is provided an elevator system comprising:
a guide rail;
an elevator component movable along the guide rail; and
the braking system as described above.

In some examples the elevator component is an elevator car. In some examples the elevator component is a counterweight. In some examples the elevator system comprises a pair of guide rails, e.g. arranged either side of the elevator component.

In some examples, the controller for the frictionless safety brake actuator and/or the braking system is integrated into a central elevator system controller.

### Detailed description

Certain preferred examples of this disclosure will now be described, by way of example only, with reference to the accompanying drawings, in which:
FIG. 1 shows an example of an elevator system employing a mechanical governor;
FIG. 2 shows a cross-section schematic of a braking system according to an example of the present disclosure;
FIG. 3A shows a cross-section schematic of a first example of a frictionless safety brake actuator of the present disclosure which is designed as a non-failsafe system during normal elevator operation;
FIG. 3B shows a cross-section schematic of the first example of the non-failsafe frictionless safety brake actuator when activated;
FIG. 4A shows a cross-section schematic of a second example of the frictionless safety brake actuator of the present disclosure which is designed as a failsafe system during normal elevator operation;
FIG. 4B shows a cross-section schematic of the second example of the frictionless safety brake actuator when activated;
FIG. 5A shows a cross-section schematic of the first example of the frictionless safety brake actuator in an actuated position;
FIG. 5B shows a cross-section schematic of the second example of the frictionless safety brake actuator in an actuated position;
FIG. 6 shows a cross-section schematic of a third example of a frictionless safety brake actuator of the present disclosure which is designed as a non-failsafe system during normal elevator operation;
FIG. 7 shows a cross-section schematic of a fourth example of a frictionless safety brake actuator of the present disclosure which is designed as a non-failsafe system during normal elevator operation;
FIG. 8A shows a cross-section schematic of a fifth example of a frictionless safety brake actuator of the present disclosure which is designed as a failsafe system during normal elevator operation;
FIG. 8B shows a cross-section schematic of a sixth example of a frictionless safety brake actuator of the present disclosure which is designed as a non-failsafe system during normal elevator operation.

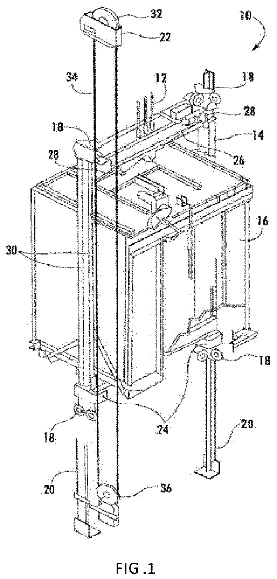

FIG. 1 shows an elevator system, generally indicated at 10. The elevator system 10 includes cables or belts 12, a car frame 14, an elevator car 16, roller guides 18, guide rails 20, a governor 22, and a pair of safety brakes 24 mounted on the elevator car 16. The governor 22 is mechanically coupled to actuate the safety brakes 24 by linkages 26, levers 28, and lift rods 30. The governor 22 includes a governor sheave 32, rope loop 34, and a tensioning sheave 36. The cables 12 are connected to the car frame 14 and a counterweight (not shown) inside a hoistway. The elevator car 16, which is attached to the car frame 14, moves up and down the hoistway by a force transmitted through the cables or belts 12 to the car frame 14 by an elevator drive (not shown) commonly located in a machine room at the top of the hoistway. The roller guides 18 are attached to the car frame 14 to guide the elevator car 16 up and down the hoistway along the guide rails 20. The governor sheave 32 is mounted at an upper end of the hoistway. The rope loop 34 is wrapped partially around the governor sheave 32 and partially around the tensioning sheave 36 (located in this example at a bottom end of the hoistway). The rope loop 34 is also connected to the elevator car 16 at the lever 28, ensuring that the angular velocity of the governor sheave 32 is directly related to the speed of the elevator car 16.

In the elevator system 10 shown in FIG. 1, the governor 22, a machine brake (not shown) located in the machine room, and the safety brakes 24 act to stop the elevator car 16 if it exceeds a set speed as it travels inside the hoistway. If the elevator car 16 reaches an over-speed condition, the governor 22 is triggered initially to engage a switch, which in turn cuts power to the elevator drive and drops the machine brake to arrest movement of the drive sheave (not shown) and thereby arrest movement of elevator car 16. If, however, the elevator car 16 continues to experience an overspeed condition, the governor 22 may then act to trigger the safety brakes 24 to arrest movement of the elevator car 16 (i.e. an emergency stop). In addition to engaging a switch to drop the machine brake, the governor 22 also releases a clutching device that grips the governor rope 34. The governor rope 34 is connected to the safety brakes 24 through mechanical linkages 26, levers 28, and lift rods 30. As the elevator car 16 continues its descent, the governor rope 34, which is now prevented from moving by the actuated governor 22, pulls on the operating levers 28. The operating levers 28 actuate the safety brakes 24 by moving the linkages 26 connected to the lift rods 30, and the lift rods 30 cause the safety brakes 24 to engage the guide rails 20 to bring the elevator car 16 to a stop.

It will be appreciated that, whilst a roped elevator is described here, the examples of a frictionless safety brake actuator described here will work equally well with a ropeless elevator system e.g. hydraulic systems, systems with linear motors and other types of ropeless propulsion systems.

Whilst mechanical speed governor systems are still in use in many elevator systems, others (e.g. ropeless elevator systems without mechanical speed governor systems) are now implementing electronically or electrically actuated systems to trigger the emergency safety brakes 24. Most of these electronically or electrically actuated systems use friction between a magnet and the guide rail 20 to then mechanically actuate a linkage to engage the emergency safety brakes 24. Examples of a safety brake actuator are disclosed herein which do not utilize friction against the guide rail 20 to actuate the safety brakes 24.

In the description of the following examples of frictionless safety brake actuators, the terms "left", "right", "up", "down", "above", "below" and similar positional and directional terms are used to refer to certain depicted features. These terms are used purely for convenience to refer to the position or orientation of those features when viewed in the figures, and do not necessarily imply any requirement on position or orientation of those features in frictionless safety brake actuators in accordance with the disclosure.

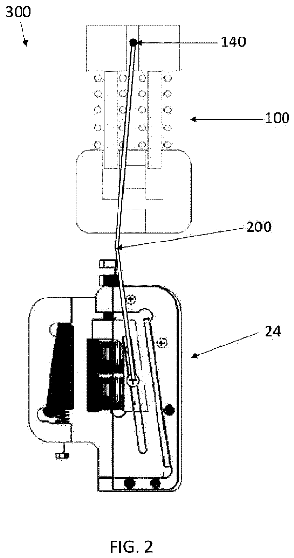

FIG. 2 shows an example braking system 300 with a frictionless safety brake actuator 100 connected via a connection arrangement 140 to a linkage 200 and the safety brake 24. The braking system 300 may be mounted on any moving component of the elevator system 10 which can move on a guide rail (not shown). The frictionless safety brake actuator 100 is mechanically connected to the safety brake 24 via the linkage 200.

The frictionless safety brake actuator 100 is positioned above the safety brake 24 and adjacent to the guide rail, although other positions are possible, e.g. the frictionless safety brake actuator 100 may be in a position that is not adjacent to the guide rail as it does not require frictional contact with the guide rail during its operation. In the event that the safety brake 24 needs to be engaged (e.g. in an elevator car overspeed situation), a controller (not shown) can send a signal to the frictionless safety brake actuator 100 to engage the safety brake 24. In response to the signal, the movable component (not shown) in the frictionless safety brake actuator 100 exerts a pulling force on the linkage 200. The pulling force is transmitted via the linkage 200 to the safety brake 24, pulling the safety brake 24 into frictional engagement with the guide rail 20, bringing the movable component (e.g. an elevator car) to a stop.

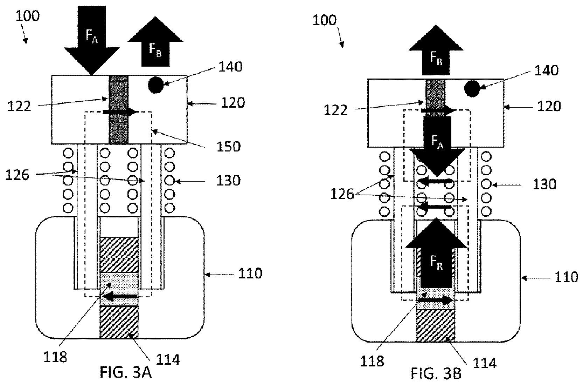

The frictionless safety brake actuator 100 may, for example, operate as any of the example frictionless safety brake actuators described below with reference to FIGS. 3-8B.

The frictionless safety brake actuators disclosed herein can be designed as a failsafe system or a non-failsafe system. In a failsafe system, any interruption of power will actuate the linkage 200 to engage the emergency safety brake 24. In a non-failsafe system, power is required to actuate the linkage 200 and engage the emergency safety brake 24.

FIG. 3A and FIG. 3B show a non-failsafe example of a frictionless safety brake actuator 100. The frictionless safety brake actuator 100 has a fixed component 110, designed to be fixed onto an elevator component movable along guide rail (as described above with reference to FIG. 2); a movable component 120 with two protrusions 126 configured to co-operate with the fixed component 110; a pair of biasing members 130 fitted around the two protrusions 126, between the fixed component 110 and the movable component 120; and a connection arrangement 140 for connecting the movable component 110 to the linkage as shown in FIG. 2. The movable component 120 has a magnetic portion which comprises a permanent magnet 122. The fixed component has an electromagnet 114, and magnetically permeable zone 118 which runs through the middle of the electromagnetic coils. It will be appreciated that the FIGS. show a cross-sectional schematic of the frictionless safety brake actuator 100, and the portions above and below the magnetically permeable zone 118 are parts of the same electromagnetic coil.

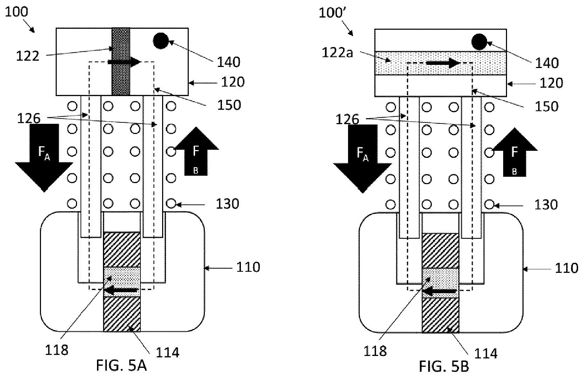

FIG. 3A shows the frictionless safety brake actuator 100 during normal operation of the elevator system, where the movable component 120 is shown in a lower position (i.e. a second position) where the biasing members 130 are compressed between the fixed component 110 and the movable component 120. The biasing members 130 are arranged to bias the movable component 120 away from the second position and into a first position (i.e. a triggered position) as shown in FIG. 5A. During normal operation of the elevator system, a magnetic circuit 150 is in effect as shown by the dotted lines, which confines the magnetic field created by the permanent magnet 122 to create an attractive magnetic force F_{A} between the movable component 120 and the fixed component 110. The attractive magnetic force F_{A} is larger than a biasing force F_{B} created by the biasing members 130, so the movable component 120 is held in the second position.

In this example the pair of biasing members 130 are a pair of compression springs arranged around the two protrusions 126, between the fixed component 110 and the movable component 120.

The magnetically permeable zone 118 is designed to confine the magnetic field in the magnetic circuit 150 as shown. The magnetically permeable zone 118 can be any magnetically permeable material, however it is preferably a ferromagnetic material. Equally, the two protrusions 126 may also be made of a magnetically permeable material, to confine the magnetic field in the magnetic circuit 150 as shown.

When the frictionless safety brake actuator 100 is activated (i.e. when the safety brake requires actuating), the electromagnet 114 is operated to produce a repulsive magnetic force F_{R} as shown in FIG. 3B. The operation of the electromagnet 114 creates an opposing magnetic field confined in an opposing magnetic circuit as shown, which produces the repulsive magnetic force F_{R}. The repulsive magnetic force F_{R} counteracts the attractive magnetic force F_{A} of the permanent magnet 122. The biasing force F_{B} of the biasing members 130 can then become the dominant force, and the movable component 120 is moved to the first position (i.e. the triggered position) as shown in FIG. 5A. The safety brake is then actuated by the linkage via the connection arrangement 140 as previously described with reference to FIG. 2.

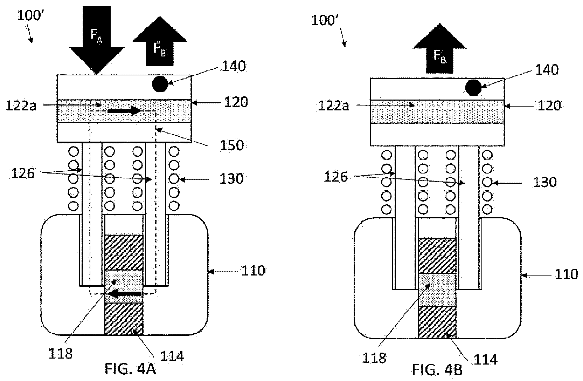

FIG. 4A and FIG. 4B show a failsafe example of a frictionless safety brake actuator 100'. The frictionless safety brake actuator 100' has the same components as the non-failsafe example frictionless safety brake 100 previously described, except the movable component 120 does not have a permanent magnet. In the failsafe example, the magnetic portion comprises a magnetic material 122a (e.g. a ferromagnetic material), which does not produce a magnetic field.

FIG. 4A shows the frictionless safety brake actuator 100' during normal operation of the elevator system, where the movable component 120 is in the second position. The biasing members 130 are arranged to bias the movable component 120 away from the second position and into a first position (i.e. a triggered position) as shown in FIG. 5B. During normal operation of the elevator system, the electromagnet 114 is activated to produce a magnetic circuit 150, as shown by the dotted lines, which confines the magnetic field created by the electromagnet 114 to create an attractive magnetic force F_{A} between the magnetic material 122a in the movable component 120 and the fixed component 110. The attractive magnetic force F_{A} is larger than a biasing force F_{B} created by the biasing members 130, so the movable component 120 is held in the second position.

When the frictionless safety brake actuator 100' is activated (i.e. when the safety brake requires actuating), the electromagnet 114 is deactivated, so there is no magnetic circuit, and no magnetic forces active in the system, as shown in FIG 4B. The biasing force F_{B} of the biasing members 130 then acts to push the movable component into the first position (i.e. triggered position) as shown in FIG. 5B. The safety brake is then actuated by the linkage as previously described with reference to FIG. 2.

FIG. 5A and FIG. 5B show two examples of the frictionless safety brake actuator 100, 100' with the movable component 120 in the first position (i.e. the triggered position); and show the effect of the magnetic circuit 150 required to reset the system i.e. to bring the movable component 120 back downwards to the second position shown in FIG. 3A and FIG. 4A.

In both the failsafe and non-failsafe examples, for the reset procedure, the electromagnet 114 is operated so the magnetic circuit 150 produces an attractive magnetic force F_{A}, which works against the biasing force F_{B} of the biasing members 130 to pull the movable component 120 downwards to the second position.

In the non-failsafe example as shown in FIG. 5A, the magnetic circuit 150 can be purely created by the permanent magnet 122 i.e. the electromagnet 114 is turned off for the reset procedure. However, the electromagnet 114 may also be operated to increase the magnetic flux in the magnetic circuit 150 during the reset procedure, and then the electromagnet 114 can be deactivated during normal operation of the elevator system.

In the failsafe example as shown in FIG. 5B, the magnetic circuit 150 is produced by activating the electromagnet 114, which acts on the magnetic material 122a in the movable component 120 to pull the movable component 120 downwards against the biasing force F_{B} of the biasing members 130.

The skilled person will appreciate that control of the electromagnet 114 can be via a simple electrical switch system, where no complex controller is required. However, in some examples, the electromagnet 114 may require a variable current, which can be controlled by an electronic controller.

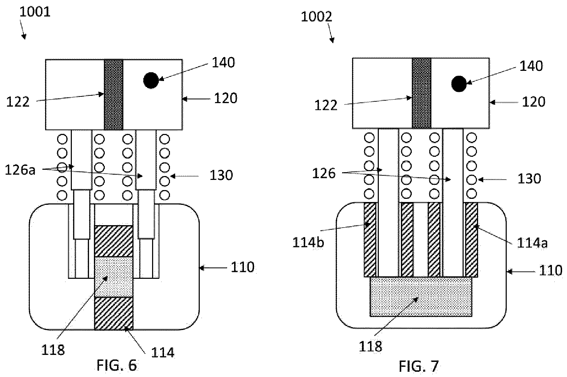

The examples shown in FIGS. 3-5 describe the basic function of the frictionless safety brake actuator according to the present disclosure. The skilled person will appreciate that various other configurations of magnetic portions and electromagnets may also be suitable. Some examples of other frictionless safety brake actuators according to the present disclosure are shown in FIGS. 6-8B.

FIG. 6 shows another non-failsafe example of a frictionless safety brake actuator 1001, having the same components as the frictionless safety brake 100 previously described with reference to FIG. 3A, 3B and 5A. However, in this example the two protrusions are telescopic arms 126a. The use of telescopic arms 126a means that even in the first (i.e. triggered) position, there is no break in the magnetic circuit (i.e. no air gaps). This helps to confine any magnetic field, increasing the efficiency of the frictionless safety brake actuator. Whilst this example is shown as a non-failsafe system with a permanent magnet 122, the telescopic arms 126a could equally be applied to the failsafe system as shown in FIGS. 4A, 4B and 5B.

FIG. 7 shows another non-failsafe example of a frictionless safety brake actuator 1002, having the same components as the frictionless safety brake 100 previously described with reference to FIG. 3A, 3B and 5A. However, in this example, instead of a single electromagnet, two electromagnets 114a, 114b are shown arranged around the area where the two protrusions 126 co-operate with the fixed component 110. The magnetic circuit is then confined by a larger magnetically permeable zone 118 arranged to connect the first electromagnet 114a and the second electromagnet 114b. Whilst this example is shown as a non-failsafe system with a permanent magnet 122, and the two electromagnets 114a, 114b could equally be applied to the failsafe system as shown in FIGS. 4A, 4B and 5B.

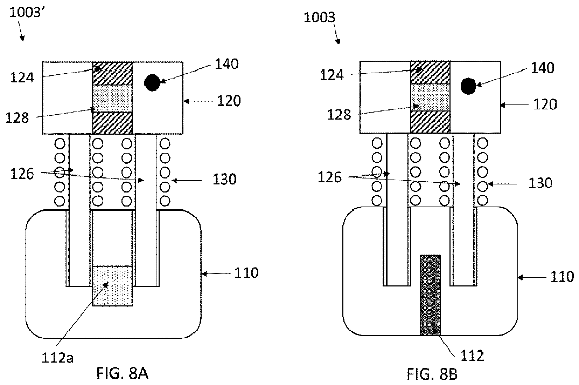

FIG. 8A and FIG. 8B show two examples of a frictionless safety brake actuator 1003' and 1003. In these examples an electromagnet 124 is located in the movable component 120, instead of the fixed component 110 as previously shown. The movable component 120 has a magnetically permeable zone 128 which acts to confine any magnetic field in the magnetic circuit as previously described.

FIG. 8A shows a failsafe example of the frictionless safety brake actuator 1003' which operates in the same way as the example described with reference to FIGS. 4A, 4B and 4B. In this example, the fixed component 110 has a magnetic portion 112a. The magnetic portion comprises a magnetic material 112a (e.g. a ferromagnetic material), however it does not produce a magnetic field.

FIG 8B shows a non- failsafe example of the frictionless safety brake actuator 1003 which operates in the same way as the example described with reference to FIGS. 4A, 4B and 4B. In this example, the fixed component 110 has a permanent magnet 112.

Whilst the examples shown herein show the movable component having two protrusions which co-operate with the fixed portion, the skilled person will appreciate that the two protrusions could equally be part of the fixed portion, and co-operate with the movable portion.

It will be appreciated by those skilled in the art that the disclosure has been illustrated by describing one or more specific aspects thereof, but is not limited to these aspects; many variations and modifications are possible, within the scope of the accompanying claims.

## Claims

1. A frictionless safety brake actuator (100; 100'; 1001; 1002; 1003'; 1003) for use in an elevator system (10), comprising:
a fixed component (110);
a movable component (120);
wherein one of the fixed component (110) or the movable component (120) comprises a magnetic portion (112; 112a; 122; 122a) and the other of the fixed component (110) or the movable component (120) comprises a controllable electromagnet (114; 114a, 114b; 124);
a connection arrangement (140) configured to connect a linkage (200) to the movable component (120), wherein the linkage (200) is actuatable so as to move a safety brake (24) into frictional engagement with an elevator guide rail (20); and
at least one biasing member (130) arranged to apply a biasing force (F_{B}) to the movable component (120) to bias the movable component (120) towards a first position in which the linkage (200) is actuated;
wherein the movable component (120) is moveable against the biasing force (F_{B}) to move between the first position and a second position in which the linkage (200) is not actuated;
wherein the fixed component (110) and the movable component (120) together confine a magnetic field between the controllable electromagnet (114; 114a, 114b; 124) and the magnetic portion (112; 112a; 122; 122a) in a magnetic circuit (150);
wherein, dependent upon control of the electromagnet (114; 114a, 114b; 124), the magnetic circuit (150) selectively produces an attractive magnetic force (F_{A}), larger than the biasing force (F_{B}), which acts upon the magnetic portion (112; 112a; 122; 122a) against the biasing force (F_{B}) of the at least one biasing member (130) to move the movable component (120) from the first position to the second position.

2. A frictionless safety brake actuator (100; 100'; 1001; 1002; 1003'; 1003) according to claim 1, wherein one of the fixed component (110) or the movable component (120) comprises two protrusions (126; 126a) configured to co-operate with the other of the fixed component (110) or the movable component (120).

3. A frictionless safety brake actuator (100; 100'; 1001; 1002; 1003'; 1003) according to claim 2, wherein the two protrusions (126; 126a) comprise a magnetically permeable material configured to confine the magnetic field in the magnetic circuit (150).

4. A frictionless safety brake actuator (100; 100'; 1001; 1002; 1003'; 1003) according to any preceding claim, wherein, when the movable component (120) is in the first position and when the movable component (120) is in the second position, there is no airgap in the magnetic circuit (150) created by the electromagnet (114; 114a, 114b; 124) and the magnetic portion (112; 112a; 122; 122a).

5. A frictionless safety brake actuator (1001) according to claim 4, wherein the two protrusions are telescopic arms (126a).

6. A frictionless safety brake actuator (100; 100'; 1001; 1002; 1003'; 1003) according to any preceding claim, wherein the fixed component (110) comprises a magnetically permeable zone (118) configured to confine the magnetic field in the magnetic circuit (150).

7. A frictionless safety brake actuator (100; 100'; 1001; 1002; 1003'; 1003) according to any preceding claim, wherein the movable component (120) comprises a magnetically permeable zone (128) configured to confine the magnetic field in the magnetic circuit (150).

8. A frictionless safety brake actuator (100; 100'; 1001; 1002; 1003'; 1003) according to any preceding claim, wherein the at least one biasing member (130) comprises at least one compression spring.

9. A frictionless safety brake actuator (100; 100'; 1001; 1002; 1003'; 1003) according to claim 8, wherein the at least one compression spring comprises a pair of compression springs formed around the two protrusions (126; 126a).

10. A frictionless safety brake actuator (100'; 1003') according to any preceding claim, wherein the magnetic portion comprises magnetic material (112a; 122a), and wherein the electromagnet (114; 114a, 114b; 124) is operable to create the magnetic circuit (150) which produces the attractive magnetic force (F_{A}) between the magnetic material (112a, 122a) and the electromagnet (114; 114a, 114b; 124) to keep the movable component (120) in the second position; and
wherein, when the electromagnet (114; 114a, 114b; 124) is deactivated, the biasing force (F_{B}) of the at least one biasing member (130) moves the movable component (120) to the first position.

11. A frictionless safety brake actuator (100; 1001; 1002; 1003) according to any of claims 1 to 9, wherein the magnetic portion is a permanent magnet (112; 122), and wherein the permanent magnet (112; 122) has an intrinsic magnetic field which is confined by the magnetic circuit (150) to produce the attractive magnetic force (F_{A}) between the deactivated electromagnet (114; 114a, 114b; 124) and the permanent magnet (112; 122), to keep the movable component (120) in the second position;
wherein the electromagnet (114; 114a, 114b; 124) is operable to produce an opposing magnetic field which produces a repulsive magnetic force (F_{R}), which in combination with the biasing force (F_{B}) of the at least one biasing member (130), is larger than the attractive magnetic force (F_{A}) produced by the intrinsic magnetic field of the permanent magnet (112; 122); and
wherein, when the electromagnet (114; 114a, 114b; 124) is operated to produce the opposing magnetic field, the combination of the biasing force (F_{B}) and the repulsive magnetic force (F_{R}) move the movable component (120) to the first position.

12. A frictionless safety brake actuator (100; 100'; 1001; 1002; 1003'; 1003) according to any preceding claim, wherein the electromagnet (114; 114a, 114b; 124) is controllable between an activated state and a deactivated state.

13. A frictionless safety brake actuator (100; 100'; 1001; 1002; 1003'; 1003) according to any of claims 1 to 11, wherein the electromagnet (114; 114a, 114b; 124) is controllable by varying a current through the electromagnet (114; 114a, 114b; 124) to vary the flow of magnetic flux through the magnetic circuit (150).

14. A frictionless safety brake actuator (100; 100'; 1001; 1002) according to any preceding claim, wherein the fixed component (110) comprises the electromagnet (114; 114a, 114b) and the movable component (120) comprises the magnetic portion (122; 122a).

15. A braking system (300) for an elevator component movable along a guide rail (20), the braking system (300) comprising:
a safety brake (24);
a linkage (200) configured to actuate the safety brake (24); and
the frictionless safety brake actuator (100; 100'; 1001; 1002; 1003'; 1003) of any preceding claim, wherein the connection arrangement (140) connects the frictionless safety brake actuator (100; 100'; 1001; 1002; 1003' 1003) to the linkage (200); and
wherein, when the frictionless safety brake actuator (100; 100'; 1001; 1002; 1003'; 1003) is activated, the movable component (110) is moved to the first position in which the linkage (200) is actuated, so as to move the safety brake (24) into frictional engagement with a guide rail (20).
